# EUROPEAN PATENT APPLICATION

(11) **EP 1 992 500 A1**
(43) Date of publication of application: **19.11.2008**
(21) Application number: 07425278.4
(22) Date of filing: 15.05.2007
(51) Int. Cl.: B60B 7/08

(54) **Hub cap for vehicle wheel**

(71) Applicant: Lupini Targhe S.p.A., 24040 Pognano (Bergamo) (IT)
(72) Inventor: Capuzzi, Angiolino c/o Lupini Targhe S.p.A., 24040 Pognano (Bergamo) (IT)
(74) Representative: Crippa, Paolo Ernesto

(57) **Abstract**

The present invention relates to a hub cap (1) for a vehicle wheel. The hub cap comprises a base (2), a first group of coupling teeth (12), suitable for making a snap-wise coupling with the wall of the hub opening and a second group of abutment teeth (14) suitable for abutting against the wall of the hub opening and shaped so as to not snap-wise engage with said wall of the hub opening. The hub cap allows easy mounting and removal from the wheel and strongly limits the onset of vibrations.

## Description

The object of the present invention is a hub cap for a vehicle wheel.

As known, hub caps are widely used, especially in the field of motor vehicles, for aesthetic purposes, that is, for covering the central opening of the rim and often, they serve as a support for the manufacturer's brand.

In order to allow quick mounting of the hub cap, a snap-wise coupling system is generally used.

However, when the vehicle is moving, and above all at predetermined speeds, the hub cap exhibits the tendency to vibrate, even noisily, negatively affecting the vehicle comfort.

Such problem has often been coped with by making the coupling system especially strong, with the drawback however of making the removal of the hub cap, sometimes required, for example for changing a punctured tyre with the spare one, very difficult.

The object of the present invention is to provide a hub cap for vehicle wheels provided with a coupling system to the hub which should be easy to mount, easy to remove and which should prevent or strongly limit the onset of vibrations at the same time.

Such object is achieved by a hub cap made according to the following claim 1. The dependent claims describe embodiment variations.

The features and advantages of the hub cap according to the present invention will appear more clearly from the following description, made by way of an indicative and non-limiting example with reference to the annexed figures, wherein:

- figure 1 shows a perspective front view of the hub cap according to an embodiment variation of the present invention;

- figure 2 shows a perspective back view of the hub cap of figure 1;

- figure 3 shows a cross section view of a portion of the hub cap engaged with a portion of the hub; and

- figure 4 shows a cross section view of a further portion of the hub cap engaged with a further portion of the hub.

With reference to the annexed figures, reference numeral 1 globally indicates a hub cap, according to an embodiment variation of the present invention, suitable for being removably associated to a hub H of a wheel, centrally provided with an opening O.

The hub cap 1 comprises a base 2, generally with a discoid shape, having a main axis X, provided with an outer surface 4, intended for facing outwards of the vehicle with hub cap mounted on the wheel, and an inner surface 6, opposite the outer surface.

Base 2 is sized for covering, at least partly, opening O of hub H.

According to a preferred embodiment, hub cap 1 further comprises a covering 8, suitable for covering at least partly the outer surface 4 of base 2.

Preferably, externally, that is, on the side facing the outer surface of the base, covering 8 has a brand.

According to a preferred embodiment, covering 8 extends so as to cover also the edge of base 2, folding along the thickness thereof.

Moreover, hub cap 1 comprises retaining means suitable for making covering 8 integral with base 2.

For example, the retaining means comprise at least one folding tab 10, protruding from the covering, for example peripherally thereof.

Preferably there is provided a plurality tabs 10, circumferentially spaced, for example at constant regular intervals.

Tabs 10, folded on the inner surface 6 of base 4, retain covering 8 to base 2. For example, the folding of the tabs is carried out by caulking.

According to an embodiment variation, the retaining means comprise ad adhesive material, placed on the outer surface 4 of base 2, for gluing covering 8 to base 2.

According to a further embodiment variation, the outer surface 4 of bottom base 2 is decorated and the hub cap is free from a covering thereof.

Preferably, the covering is made in a single piece, of a metal material.

Preferably, the main axis X of base 2 is central and perpendicular to the outer surface 4 thereof, so as to define also the mounting direction, according to which the hub cap is pushed in opening O of hub H for being mounted.

Moreover, hub cap 1 comprises engagement means suitable for engaging the hub cap with opening O of hub H.

The engagement means comprise a plurality of teeth protruding peripherally from base 2, along the direction of the main axis X, circumferentially spaced.

The teeth exhibit different structural features, so that they can be distinguished into at least two groups: a first group of coupling teeth 12 and a second group of abutment teeth 14.

The coupling teeth 12 are shaped for obtaining a snap-wise coupling with the wall that delimits opening O of hub H.

For example, the coupling tooth 12 comprises a tooth wall 16, projecting from base 2, which extends from a foot 16a, jointed to base 2, to an end top 16b, axially opposite to foot 16a.

The coupling tooth 12 further comprises a gripping projection 16c, which extends from top 16b of tooth 12, enlarging towards base 2, making a sloping surface, for example having a pattern that enlarges radially externally towards base 2.

Preferably, moreover, between the gripping projection 16c and base 2, the coupling tooth 12 exhibits a recess 16d, radially external, which extends circumferentially by the entire extension of the coupling tooth 12.

In other words, the tooth wall 16 of tooth 12, projects from base 2 from a position close to the peripheral edge thereof, but sufficiently recessed, so that the residual projection of base 2 and the gripping projection 16c of the tooth wall 16 form said recess 16d.

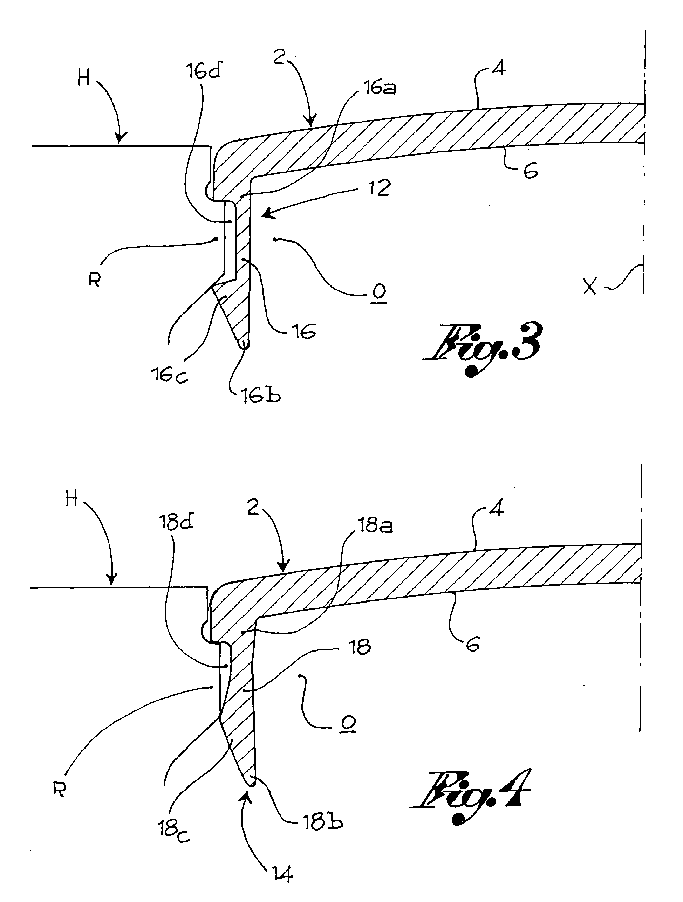

Recess 16d exhibits such axial extension that in a deformed configuration of tooth 12, the hub cap is associated to the hub, an annular projection R of hub H is axially seated in recess 16d, for making said snap-wise coupling between the hub cap and the hub (figure 3).

In other words, when the hub cap is associated to the hub, tooth 12 deforms interfering with the wall that delimits opening O; the gripping projection 16c moves underneath projection R and tooth 12, at least partly, returns to the non-deformed configuration. The gripping projection 16d, arranging in undercut to the annular projection R of the hub in the direction of extraction of the hub cap, makes a snap-wise coupling.

The abutment teeth 14, on the other hand, are shaped for obtaining an abutment between the hub cap and the wall that delimits opening O in hub H, substantially avoiding being an obstacle to the axial extraction of the hub cap from the hub.

For example, the abutment tooth 14 comprises a tooth wall 18, projecting from base 2, which extends from a foot 18a, jointed to base 2, to an end top 18b, axially opposite to foot 18a.

The abutment tooth 14 further comprises an abutment projection 18c, which extends from top 16b of tooth 14, enlarging towards base 2, making a sloping surface, for example having a pattern that enlarges radially externally towards base 2.

The abutment projection 18c is jointed to foot 18a of tooth 14, radially externally, forming a recess 18d.

It should be noted that recess 18d exhibits such axial extension that the annular projection R of hub H does not seat within said recess 18d when the hub cap is associated to the hub.

In other words, no portion of the abutment projection 18c is in undercut to projection R of hub H in the direction and in the removal direction of the hub cap from the hub.

In this way, the abutment tooth 14 does not make a further coupling, but an abutment that strongly limits the vibrations of the hub cap.

According to a preferred embodiment, the hub cap 1 comprises reinforcing means suitable for reinforcing the radial strength of teeth 12, 14.

For example, the reinforcing means comprise at least one contrast element 20, arranged at feet 16a, 18a of teeth 12, 14 and protruding from the inner surface 6 of base 2.

For example, for each tooth 12, 14 there is provided a pair of contrast elements 20, arranged circumferentially spaced, by the maximum possible angular distance.

According to a preferred embodiment, the coupling teeth 12 and the abutment teeth 14 are arranged circumferentially, preferably angularly equally spaced, forming a periodical sequence, that is, repetitive.

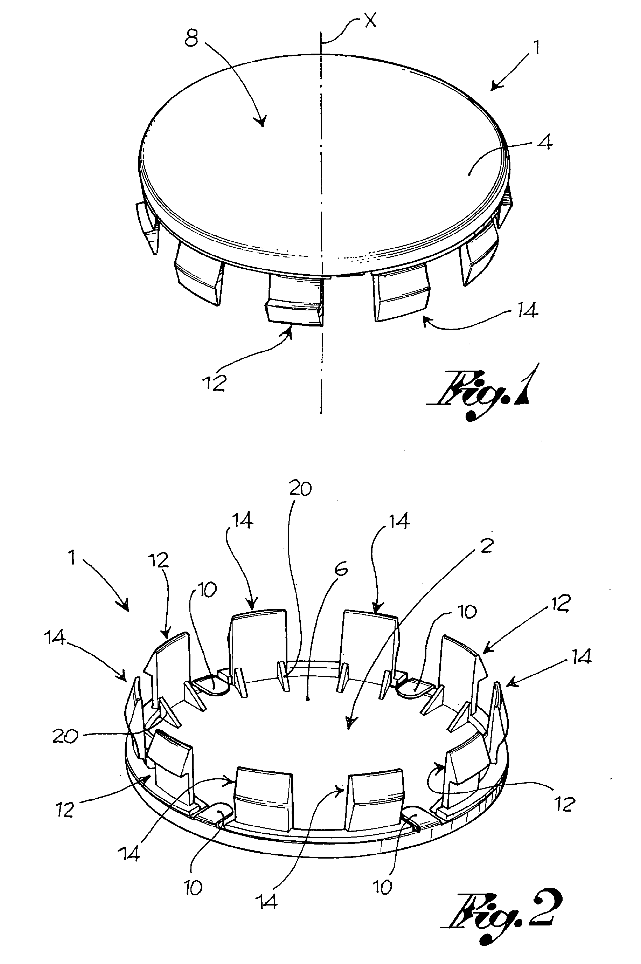

For example, a particularly advantageous configuration, as it is suitable for balancing the effort required for mounting and removing the hub cap and limiting the vibrations, has proved to be the one shown (figure 2), comprising ten teeth, arranged as follows: one coupling tooth 12, two abutment teeth 14, one coupling tooth 12, one abutment tooth 14, one coupling tooth 12, two abutment teeth 14, one coupling tooth 12 and one abutment tooth 14.

Preferably, moreover, the base and the teeth are made in a single piece, for example by moulding, in a plastic material.

Innovatively, the hub cap according to the present invention is provided with a coupling system to the hub that is at the same time easy to mount, easy to be removed and which prevents or strongly limits the onset of vibrations.

Advantageously, moreover, the teeth exhibit a sufficiently sturdy structure to prevent breakage, but at the same time they ensure the desired flexibility.

It is clear that a man skilled in the art can make several changes and variations to the hub cap described above in order to meet specific and incidental needs.

For example, according to an embodiment variation, the base and the teeth are made of a metal material.

According to a further variation, the covering is made of a plastic material.

Also such alternative embodiments are to be deemed as comprised in the scope of protection as defined by the following claims.

## Claims

1. Hub cap (1) suitable for being removably associated to an opening (O) of a hub (H) of a vehicle wheel, comprising:
- a base (2) sized for covering at least partly said opening (O) of the hub (H), having a main axis (X), provided with an outer surface (4), intended for facing outwards of the vehicle with hub cap mounted on the wheel, and an inner surface (6), opposite the outer surface;
- engagement means suitable for engaging the hub cap with opening (O) of hub (H), comprising a plurality of teeth (12, 14) protruding peripherally from the inner surface (6) of the base (2), along the direction of the main axis (X), circumferentially spaced;
wherein the teeth can be structurally distinguished into at least two groups:
a) a first group of coupling teeth (12) suitable for obtaining a snap-wise coupling with the wall of the hub opening; and
b) a second group of abutment teeth (14) suitable for abutting against the wall of the hub opening and shaped so as to not snap-wise engage with said wall of the hub opening.

2. Hub cap according to claim 2, wherein the coupling teeth (12) and the abutment teeth (14) are arranged circumferentially so as to form a periodic sequence.

3. Hub cap according to claim 1 or 2, wherein the teeth are arranged angularly equally spaced.

4. Hub cap according to any one of the previous claims, wherein the coupling tooth (12) comprises
- a tooth wall (16), projecting from the base (2), which extends from a foot (16a), jointed to the base (2), to an end top (16b), axially opposite the foot (16a); and
- a gripping projection (16c), which extends from the top (16b) radially externally, for making an undercut portion of an annular projection (R) of the wall of the opening (O) of the hub (H) when the hub cap is associated to the hub.

5. Hub cap according to claim 4, wherein the gripping projection makes a sloping surface.

6. Hub cap according to claim 4 or 5, wherein the coupling tooth (12) exhibits, between the gripping projection (16c) and the base (2), a recess (16d), shaped and arranged for seating at least partly, the annular projection (R) of the wall of the opening (O).

7. Hub cap according to any one of the previous claims, wherein the abutment tooth (14) comprises:
- a tooth wall (18), projecting from the inner surface (6) of the base (2), which extends from a foot (18a), jointed to the base (2), to an end top (18b), axially opposite the foot (18a); and
- an abutment projection (18c), which extends from the top (18b) of the tooth (14) jointed to the foot (18a) of the tooth (14), forming a radially external recess (18d) spaced and positioned for preventing seating the annular projection (R) of the wall of the opening (O) of the hub (H).

8. Hub cap according to any one of the previous claims, comprising reinforcing means suitable for reinforcing the radial strength of the teeth (12, 14).

9. Hub cap (1) according to claim 8, wherein the reinforcing means comprise at least one contrast element (20), projecting from the inner surface (6) of the base (2), radially internally to the tooth (12, 14) and jointed thereto.

10. Hub cap according to any one of the previous claims, comprising a covering (8), suitable for at least partly covering the outer surface (4) of the base (2).

11. Hub cap according to claim 10, wherein the covering (8) extends so as to cover also the edge of the base (2), folding along the thickness thereof.

12. Hub cap according to claim 10 or 11, comprising retaining means suitable for making the covering (8) integral with the base (2).

13. Hub cap according to claim 12, wherein the retaining means comprise at least one folding tab (10), protruding from the covering, peripherally thereof.

14. Hub cap according to any one of the previous claims, wherein the base and the teeth are made in a single piece.

15. Hub cap according to claim 14, wherein the base and the teeth are made of a plastic material.

## Amended claims

### Amended claims in accordance with Rule 137(2) EPC.

**1.** Hub cap (1) suitable for being removably associated to an opening (O) of a hub (H) of a vehicle wheel, comprising:
- a base (2) sized for covering at least partly said opening (O) of the hub (H), having a main axis (X), provided with an outer surface (4), intended for facing outwards of the vehicle with hub cap mounted on the wheel, and an inner surface (6), opposite the outer surface;
- engagement means suitable for engaging the hub cap with opening (O) of hub (H), comprising a plurality of teeth (12, 14) protruding peripherally from the inner surface (6) of the base (2), along the direction of the main axis (X), circumferentially spaced;
wherein the teeth can be structurally distinguished into at least two groups:
a) a first group of coupling teeth (12) suitable for obtaining a snap-wise coupling with the wall of the hub opening; and
b) a second group of abutment teeth (14) suitable for abutting against the wall of the hub opening and shaped so as to not snap-wise engage with said wall of the hub opening,
wherein the hub comprises a covering (8), suitable for at least partly covering the outer surface (4) of the base (2),
and wherein the hub comprises retaining means suitable for making the covering (8) integral with the base (2), wherein the retaining means comprise at least one folding tab (10), protruding from the covering, peripherally thereof, said tab being suitable to be folded on the inner surface (6) of the base (4) retaining covering (8) to said base (2).

**2.** Hub cap according to claim 1, wherein the coupling teeth (12) and the abutment teeth (14) are arranged circumferentially so as to form a periodic sequence.

**3.** Hub cap according to claim 1 or 2, wherein the teeth are arranged angularly equally spaced.

**4.** Hub cap according to any one of the previous claims, wherein the coupling tooth (12) comprises
- a tooth wall (16), projecting from the base (2), which extends from a foot (16a), jointed to the base (2), to an end top (16b), axially opposite the foot (16a); and
- a gripping projection (16c), which extends from the top (16b) radially externally, for making an undercut portion of an annular projection (R) of the wall of the opening (O) of the hub (H) when the hub cap is associated to the hub.

**5.** Hub cap according to claim 4, wherein the gripping projection makes a sloping surface.

**6.** Hub cap according to claim 4 or 5, wherein the coupling tooth (12) exhibits, between the gripping projection (16c) and the base (2), a recess (16d), shaped and arranged for seating at least partly, the annular projection (R) of the wall of the opening (O).

**7.** Hub cap according to any one of the previous claims, wherein the abutment tooth (14) comprises:
- a tooth wall (18), projecting from the inner surface (6) of the base (2), which extends from a foot (18a), jointed to the base (2), to an end top (18b), axially opposite the foot (18a); and
- an abutment projection (18c), which extends from the top (18b) of the tooth (14) jointed to the foot (18a) of the tooth (14), forming a radially external recess (18d) spaced and positioned for preventing seating the annular projection (R) of the wall of the opening (O) of the hub (H).

**8.** Hub cap according to any one of the previous claims, comprising reinforcing means suitable for reinforcing the radial strength of the teeth (12, 14).

**9.** Hub cap (1) according to claim 8, wherein the reinforcing means comprise at least one contrast element (20), projecting from the inner surface (6) of the base (2), radially internally to the tooth (12, 14) and jointed thereto.

**10.** Hub cap according to any one of the preceding claims, wherein the covering (8) extends so as to cover also the edge of the base (2), folding along the thickness thereof.

**11.** Hub cap according to any one of the preceding claims, wherein each folding tab (10) is positioned between a tooth (12) of the first group and an immediately adjacent tooth (14) of the second group.

**12.** Hub cap according to any one of the preceding claims, wherein the tabs (10) are circumferentially spaced at constant regular intervals.

**13.** Hub cap according to any one of the preceding claims, wherein the covering is made in a single piece of a metal material.

**14.** Hub cap according to any one of the previous claims, wherein the base and the teeth are made in a single piece.

**15.** Hub cap according to claim 14, wherein the base and the teeth are made of a plastic material.
